# EUROPEAN PATENT APPLICATION

(11) **EP 1 452 292 A2**
(43) Date of publication of application: **01.09.2004**
(21) Application number: 03018989.8
(22) Date of filing: 21.08.2003
(51) Int. Cl.: B29C 44/16

(54) **Joint structure for a foamed part of an instrument panel**

(30) Priority: 26.02.2003 KR 2003012085
(71) Applicant: Duckyang Ind. Co., Ltd., Ulsan (KR)
(72) Inventor: Lee, Shin Sik, Buk-ku, Ulsan (KR); Ju, Sang Ryool, Kyeong-Nam (KR)
(74) Representative: Staudt, Hans-Peter, Dipl.-Ing.

(57) **Abstract**

Disclosed is a joint structure for a partial foaming part of an instrument panel, which is capable of preventing loss of materials due to unnecessary consumption of the skin layer and leakage of a polyurethane foam filled between the core layer and the skin layer during partial foaming of the instrument panel. In a joint structure between a core layer 2 and a skin layer 3 for manufacturing a partial foaming part 1 of which a polyurethane foam layer 4 is formed between the core layer 2 and the skin layer 3, a partial end portion 31 is curved inwards within the polyurethane foam layer 4 at a front end of the skin layer 3. A skin end portion 32 upwardly extends from an end of the partial end portion 31 and is pressed against the core layer 2 due to foaming pressure of the polyurethane foam layer 4. A foam staying space 33 is provided between an inner side surface of the core layer 2 and the skin end portion 32 of the skin layer 3. Flow control walls 21, 21', for preventing a polyurethan foam from being overflowed directly between the inner side surface of the core layer 2 and an end of the skin layer 3, downwardly is foamed from an inner upper surface of the core layer 2 above the joint part of the core layer 2 and the skin layer 3.

## Description

### Background of the Invention

### 1. Field of the Invention

The present invention relates to a joint structure for a partial foaming part of an instrument panel, in which a core layer is integrally combined with a skin layer by forming a polyurethane foam layer there between.

More particularly, it is relates to a joint structure for a partial foaming part of an instrument panel, which is capable of preventing loss of materials due to unnecessary consumption of the skin layer and leakage of a polyurethane foam filled between the core layer and the skin layer during partial foaming of the instrument panel, which is capable of reducing the number of process for manufacturing the instrument panel by minimizing necessary process for performing the partial foaming of the polyurethane, and which is capable of strongly combining the core layer with the skin layer, by preventing the polyurethane foam from being leaking during partial foaming of the polyurethane through a joint part of the core layer and the skin layer, and by making a small quantity of leaked polyurethane foam to be stayed within a foam staying space provided between the core layer and the skin layer.

### 2. Description of the Prior Art

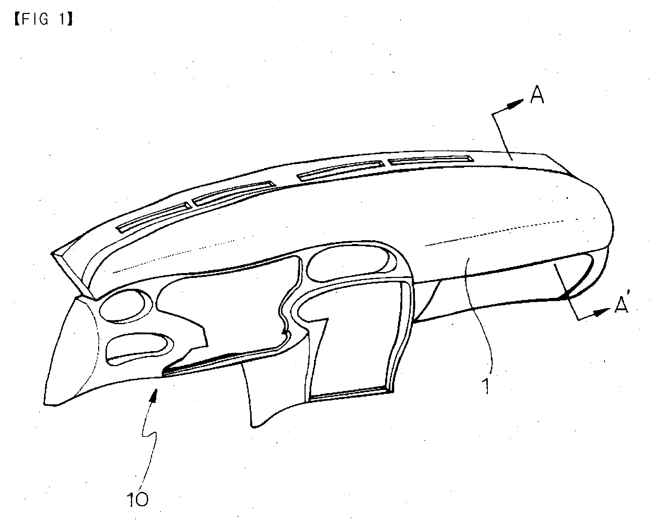

The use of an instrument panel for interior decorating materials of an automobile is well known by those skilled in the art. As shown in FIG. 1, the instrument panel 10 includes an instrument board for giving intelligence about driving such as a velocity of the automobile, oil left, various alarming signals, etc., which is installed in front of a driver's seat and an assistant driver's seat.

The instrument panel 10 further includes various spaces for containing various goods or for mounting driving facilities such as an audio system. The instrument panel 10 protects a passenger in a car from danger such as a traffic accident by absorbing shocks applied to the passenger in the car at the time of a crash.

The instrument panels are classified into a soft panel and a hard panel on the basis of manufacturing technique.

According to the soft panel manufacturing technique, it is possible to providing a high class image and a smooth touch feel for the instrument panel 10 having a triple structure, of which a core layer, a polyurethane foam layer and a skin layer are integrally formed together. However, since the whole of the instrument panel 10 is composed of polyurethane foam, there has been a problem in that the weight and the manufacturing cost of the automobile are increased together.

According to the hard panel manufacturing technique, since the instrument panel 10 may be produced through an injection molding process by using a single material, it is possible to reduce the weight and the manufacturing cost of the automobile. However, there has been a problem in that the hard panel cannot have the high-class image and the smooth touch feel. Accordingly, this technique is inappropriate to manufacture a large-sized car having a high price.

In order to solve these problems, conventionally methods for partially foaming and manufacturing the instrument panel 10 with making use of the soft and the hard panel manufacturing techniques' merits have been developed.

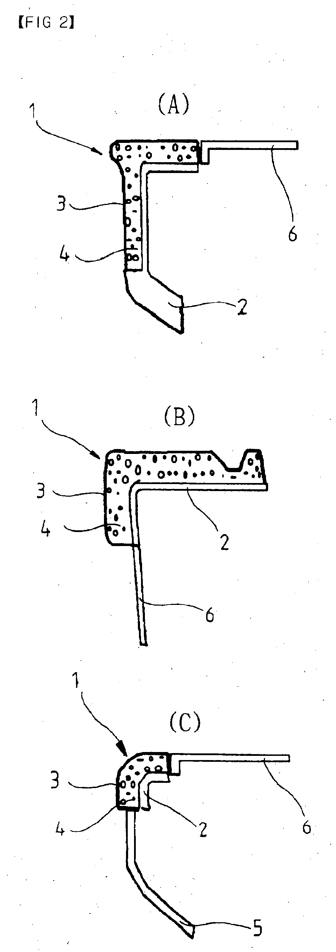

Herein below, the structure of the instrument panel 10 made by performing the conventional partial foaming method will be explained with reference drawings FIGS. 2A to 2C.

FIGS. 2A to 2C are sectional views for schematically showing structures of the instrument panel made by performing the partial foaming methods according to a prior art. In detail, FIG. 2A shows a partial pad, FIG. 2B shows a top pad and FIG. 2C shows a cap pad. According to this conventional partial foaming methods, a part of the instrument panel 10 to have a high class image and a smooth touch feel is separated from a body of the instrument panel 10, and then a polyurethane foam layer 4 is formed a core layer 2 and a skin layer 3, and thereby a partial foaming part 1 has been completed. By assembling this partial foaming part 1 with a panel part 6 made by performing the hard panel manufacturing technique, the instrument panel 10 has been produced.

However, there has been a problem in that the polyurethane foam is easily leaking through the joint part between the core layer 2 and the skin layer 3 during foaming of the polyurethane. Due to this, the skin layer 3 must be formed at an excessively large scale and thereby it may be exposed to the outside after performing the partial foaming of the polyurethane. Accordingly, the exposed part of the skin layer 3 becomes stiff. In order to remove this hardening part of the skin layer 3 is removed together with the skin layer 3 by using a cutting process. Thereafter, the surface of the partial foaming part 1 must be finished by using unnecessary certain finishing process. Then, the partial foaming part 1 is assembled with the panel part 6 by using an additional assembling process. As a result, the material for the skin layer 3 and the polyurethane foam consume away and the number of process for manufacturing the instrument panel 10 is increased. Consequently, the manufacturing cost of the instrument panel 10 is highly increased.

### Summary of the Invention

The present invention is contrived to solve the foregoing problems. An object of the present invention is to provide a joint structure for a partial foaming part of an instrument panel, which is capable of preventing loss of materials due to unnecessary consumption of the skin layer and leakage of a polyurethane foam filled between the core layer and the skin layer during partial foaming of the instrument panel, which is capable of reducing the number of process for manufacturing the instrument panel by minimizing necessary process for performing the partial foaming of the polyurethane, and which is capable of strongly combining the core layer with the skin layer, by preventing the polyurethane foam from being leaking during partial foaming of the polyurethane through a joint part of the core layer and the skin layer, and by making a small quantity of leaked polyurethane foam to be stayed within a foam staying space provided between the core layer and the skin layer.

In order to achieve the above object, the present invention provides a joint structure between a core layer and a skin layer for manufacturing a partial foaming part of which a polyurethane foam layer is formed between the core layer and the skin layer, characterized by comprising:
a partial end portion being curved inwards within the polyurethane foam layer at a front end of the skin layer that is correspond to a joint part between the core layer and the skin layer; and
a skin end portion upwardly extending from an end of the partial end portion and being pressed against the core layer due to foaming pressure of the polyurethane foam layer,
wherein a foam staying space is provided between an inner side surface of the core layer and the skin end portion of the skin layer.

A flow control wall, for preventing a polyurethan foam from being overflowed directly between the inner side surface of the core layer and an end of the skin layer, downwardly protrudes from an inner upper surface of the core layer above the joint part of the core layer and the skin layer.

Furthermore, the present invention provides a joint structure between a core layer and a skin layer for manufacturing a partial foaming part of which a polyurethane foam layer is formed between the core layer and the skin layer, characterized by comprising:
a partial end portion being curved inwards from an inner side surface of the core layer within the polyurethane foam layer at a front end of the skin layer that is correspond to a joint part between the core layer and the skin layer;
a skin end portion upwardly extending from an end of the partial end portion and being pressed against the core layer due to foaming pressure of the polyurethane foam layer; and
a foam leakage-preventing protrusion, for preventing a polyurethane foam from being leaking, protruding from the inner side surface of the core layer which is correspond to the joint part between the core layer and the skin layer, the foam leakage-preventing protrusion being contacted with the partial end portion of the skin layer;
wherein a foam staying space is provided between the foam leakage-preventing protrusion and the skin end portion.

Alternatively, a groove for providing a foam staying space therein may be formed at an inner side surface of the core layer, which is correspond to a joint part of the core layer and the skin layer. At this time, a front portion of the skin layer longitudinally extends along the front surface of the core layer so that it may be tightly contacted with the inner side surface of the core layer in which the groove is formed.

Alternatively, a partial end portion is curved inwards from an inner side surface of the core layer within the polyurethane foam layer at a front end of the skin layer that is correspond to a joint part between the core layer and the skin layer. At this time, a foam leakage-preventing protrusion, for preventing polyurethane foam from being leaking, protrudes from the inner side surface of the core layer, which is, correspond to the joint part between the core layer and the skin layer. The foam leakage-preventing protrusion is curved with corresponding to the shape of the partial end portion of the skin layer. In addition, a groove for providing a foam staying space therein is formed at the inner side surface of the core layer below the foam leakage-preventing protrusion. Alternatively, a foam staying space for introducing the polyurethane foam therein is provided between the foam leakage-preventing protrusion of the core layer and the partial end portion of the skin layer.

### Brief Description of the Drawings

The above object and other characteristics and advantages of the present invention will become more apparent by describing in detail-preferred embodiments thereof with reference to the attached drawings, in which:
FIG. 1 is a perspective view of a general instrument panel;
FIGS. 2A to 2C are sectional views for schematically showing structures of the instrument panel made by performing a partial foaming technique according to a prior art;
FIG. 3 is a sectional view taken along line "A-A" in FIG. 1, showing a joint structure for a partial foaming part of an instrument panel according to the present invention;
FIGS. 4A to 4C, 5A and 5B are sectional views showing a joint structure for a partial foaming part of an instrument panel according to a preferred first embodiment of the present invention;
FIGS. 6A, 6B and FIG. 7 are sectional views showing a joint structure for a partial foaming part of an instrument panel according to a preferred second embodiment of the present invention;
FIGS. 8A, 8B and FIG. 9 are sectional views showing a joint structure for a partial foaming part of an instrument panel according to a preferred third embodiment of the present invention;
FIGS. 10 and FIG. 11 are sectional views showing a joint structure for a partial foaming part of an instrument panel according to a preferred fourth embodiment of the present invention;
FIGS. 12A and FIG. 12B are sectional views showing a joint structure for a partial foaming part of an instrument panel according to a preferred fifth embodiment of the present invention; and
FIGS. 13A and FIG. 13B are sectional views showing a joint structure for a partial foaming part of an instrument panel according to a preferred sixth embodiment of the present invention.

### Detailed Description of the Invention

Hereinafter, preferred embodiments of the present invention will be explained in more detail with reference to the accompanying drawings.

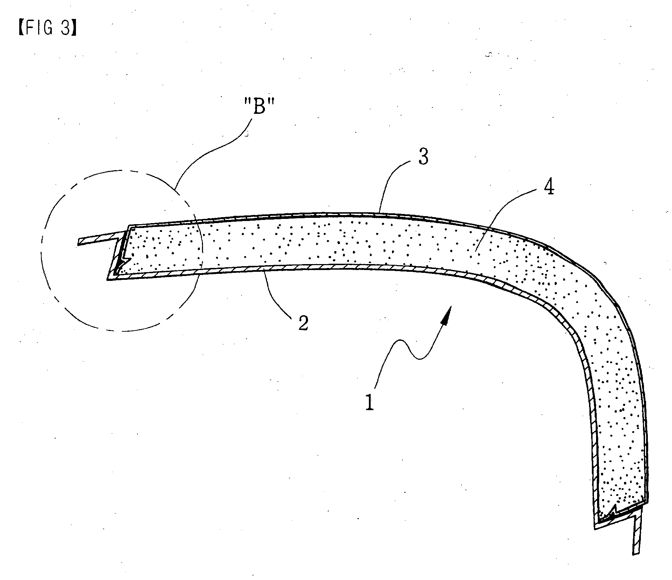

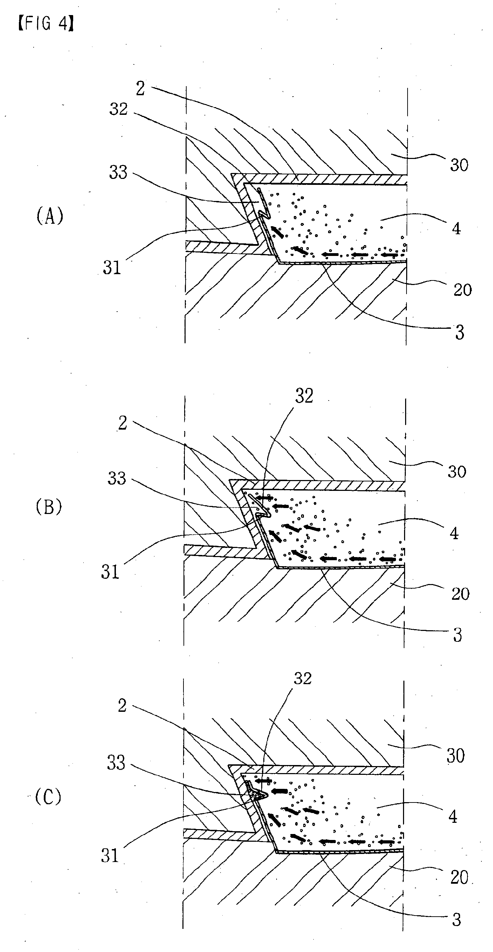

A joint structure for a partial foaming part of an instrument panel according to the present invention is shown in FIG. 3 at a sectional view taken along line "A-A" in FIG. 1. Various preferred embodiments of the present invention are also shown in FIGS. 4A to 13B. That is, a variety of foaming steps for forming the part "B" of a partial foaming part as illustrated in FIG. 3 are shown in FIGS. 4A to 13B.

Referring now to FIG. 3, the joint structure for the partial foaming part of the instrument panel according to the present invention is formed by pouring polyurethane foam between a core layer 2 and a skin layer 3 within a foaming mould and thereafter by foaming it there between. The joint structure for the partial foaming part of the instrument panel according to the present invention has a triple structure, of which the core layer 2, a polyurethane foam layer 4 and the skin layer 3 are integrally formed together. At both ends of a partial foaming part 1 having the triple structure described above, the core layer 2 and the skin layer 3 cross each other there so that a joint part is provided. At this time, both ends of the core layer 2 are formed as a single layer and extend outwards, respectively. Since the core layer 2 is previously formed with considering the total shape of an instrument panel 10, the instrument panel 10 having the core layer 2 and the skin layer 3 integrally formed with each other can be produced by foaming the polyurethane foam layer 4.

In the meantime, the joint part between the core layer 2 and the skin layer 3 of the partial foaming part 1 must have a structure for preventing polyurethane foam from being leaking during foaming of the polyurethane. In order to have this structure, the core layer 2 must be matched with the skin layer 3.

Herein below, matching types between the core layer 2 and the skin layer 3 will be explained in detail with reference to FIGS. 4A to 13B.

If the instrument panel 10 is produced by using the partial foaming part 1, the skin layer 3 is positioned above the core layer 2, as shown in FIG. 3. However, when the polyurethane is foamed after mounting the skin layer 3 and the core layer 2 onto a predetermined foaming mould, the core layer 2 is positioned above the skin layer 3 in the foaming mould. Accordingly, the joint structure and the assembling process of the partial foaming part 1 will be explained with considering in a state that the skin layer 3 and the core layer 2 are mounted onto the foaming mould.

At first, as shown in FIG. 4A, in the joint structure of the partial foaming part 1 according to the preferred first embodiment of the present invention, a partial end portion 31 is formed at a front end of the skin layer 3, which is correspond to the joint part between the core layer 2 and the skin layer 3, and it is slanted towards an interior of the polyurethane foam layer 4. A skin end portion 32 upwardly extends from an end of the partial end portion 31 parallel to a front portion of the core layer 2.

The skin end portion 32 is spaced from an inner upper surface of the core layer 2 at a predetermined distance, which is corresponding to the joint part. When polyurethane is foamed, the skin layer 3 is tightly contacted with the core layer 2 due to a foaming pressure of the polyurethane foam layer 4.

Furthermore, a small quantity of polyurethane foam flowing over an end of the skin layer 3 due to the foaming pressure is stayed in a foam staying space 33. This foam staying space 33 effectively prevents the polyurethane foam from being leaking through the joint part between the core layer 2 and the skin layer 3 during foaming of the polyurethane. The skin end portion 32 is tightly contacted with the core layer 2 due to the foaming pressure of the polyurethane foam layer 4 during foaming of the polyurethane. Preferably, the skin end portion 32 is made of a predetermined material that is one identical with a raw material of the skin layer 3. However, the thickness of the skin end portion 32 may be smaller than that of the skin layer 3 so that a pressed transformation can be easily induced due to the foaming pressure of the polyurethane.

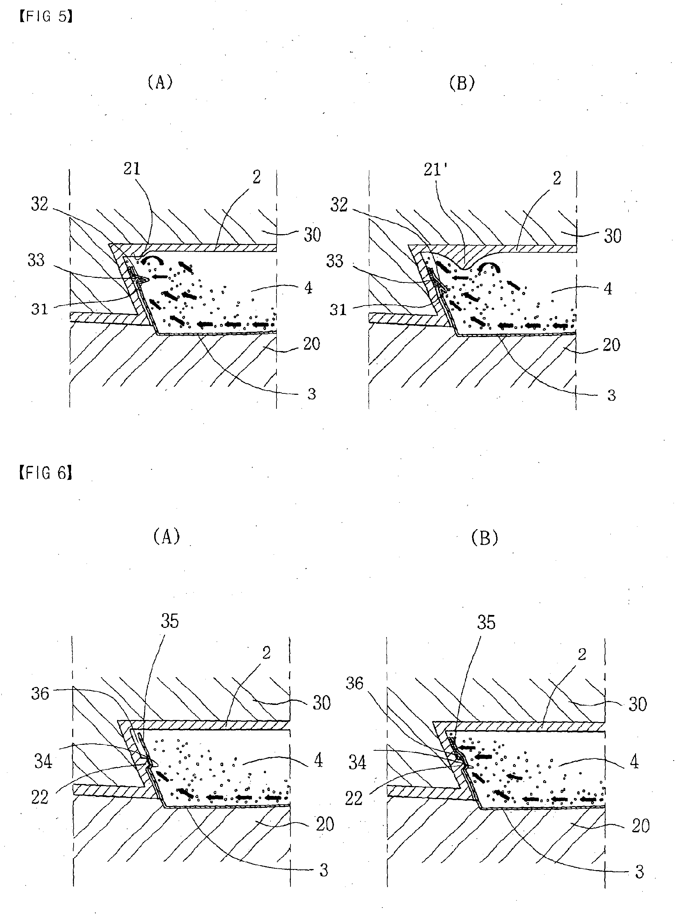

As shown in FIGS. 5A and 5B, flow control walls 21, 21' is foamed from the inner upper surface of the core layer 2 at a certain position above the joint part between the core layer 2 and the skin layer 3. These flow control walls 21,21' change a flowing direction of the polyurethane foam flowing over the end of the skin layer 3 due to the foaming pressure and thereby they reduce the foaming pressure of the foam applied to the end of the skin layer 3. Further, they can minimize the leakage of the polyurethane foam through the joint part between the core layer 2 and the skin layer 3.

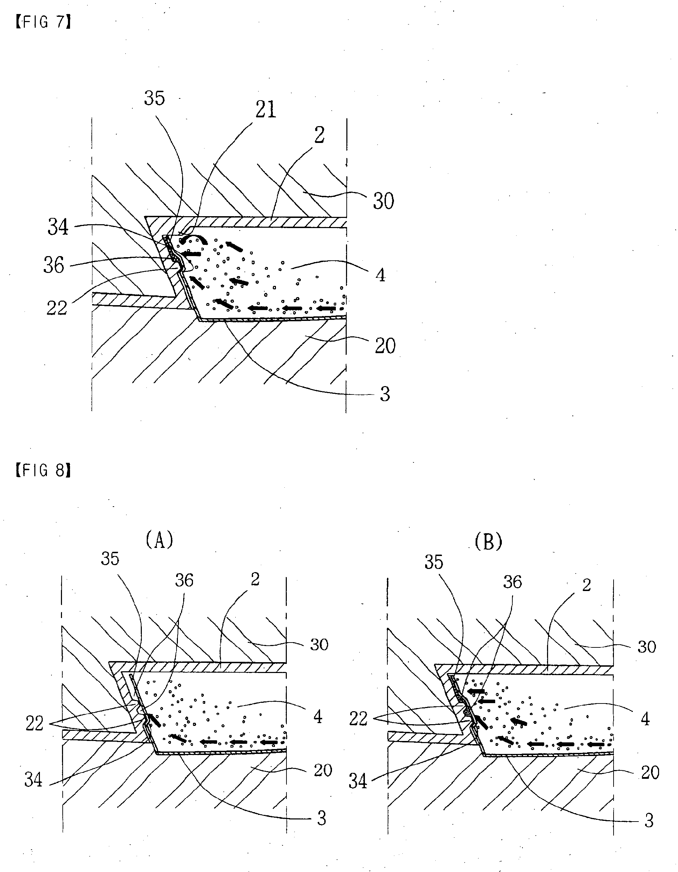

Referring to FIG. 6A, in the joint structure of the partial foaming part 1 according to the preferred second embodiment of the present invention, a partial end portion 34 is formed at a front end of the skin layer 3, which is correspond to the joint part of between the core layer 2 and the skin layer 3, and it is slanted towards an interior of the polyurethane foam layer 4. A skin end portion 35 upwardly extends from an end of the partial end portion 34 parallel to a front portion of the core layer 2. A foam leakage-preventing protrusion 22 protrudes from an inner side surface of the core layer 2, which is correspond to the joint part of the core layer 2 and the skin layer 3.

As described above in the preferred first embodiment according to the present invention, the skin end portion 35 is spaced from an inner upper surface of the core layer 2 at a predetermined distance, which is correspond to the joint part between the core layer 2 and the skin layer 3. When polyurethane is foamed, the skin layer 3 is tightly contacted with the core layer 2 due to the foaming pressure. Furthermore, a small quantity of polyurethane foam flowing over an end of the skin layer 3 due to the foaming pressure is stayed in a foam staying space 36. This foam staying space 36 effectively prevents the polyurethane foam from being leaking through the joint part between the core layer 2 and the skin layer 3 during foaming of the polyurethane. The skin end portion 35 is tightly contacted with the core layer 2 due to the foaming pressure of the polyurethane foam layer 4 during foaming of the polyurethane.

Referring to FIG. 7, in the joint structure of the core layer 2 and the skin layer 3 according to the preferred second embodiment of the present invention, a flow control wall 21 protrudes from the inner upper surface of the core layer 2 at a certain position above the joint part between the core layer 2 and the skin layer 3. This flow control wall 21 changes a flowing direction of the foam flowing over the end of the skin layer 3 due to the foaming pressure and thereby it can reduce the foaming pressure of the polyurethane foam applied to the end of the skin layer 3. Further, it can minimize the leakage of the polyurethane foam through the joint part between the core layer 2 and the skin layer 3. The flow control wall 21 as shown in FIG. 7 may be replaced with the flow control wall 21' as shown in FIG. 5B.

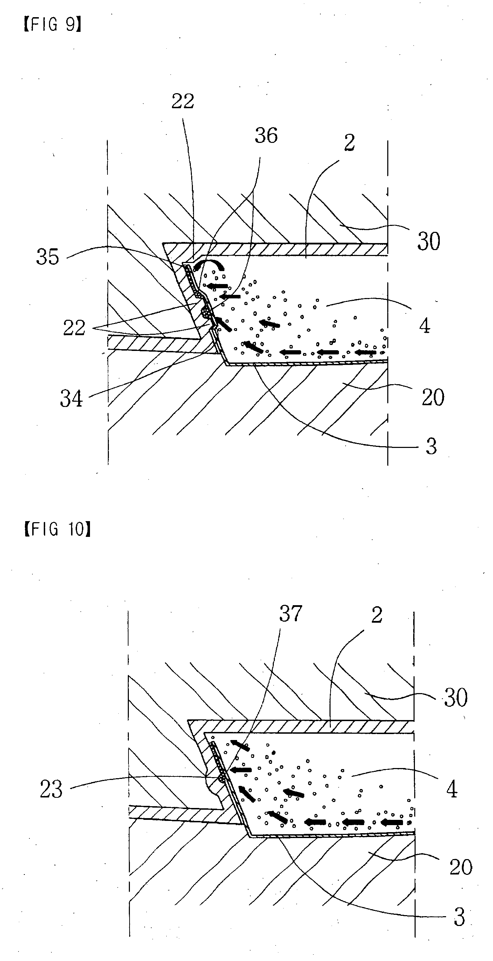

Referring to FIGS. 8A, 8B and 9, in the joint structure of the partial foaming part 1 according to the preferred third embodiment of the present invention, two foam leakage-preventing protrusion 22 according to the preferred second embodiment of the present invention are provided at the inner side surface of the core layer 2 and a foam staying space 36 is provided between the foam leakage-preventing protrusion 22 and the front portion of the skin layer 3. Other constitution of the preferred third embodiment of the present invention is the same as that of the preferred second embodiment and therefore the detail explanation will be omitted.

Referring to FIG. 10, in the joint structure of the partial foaming part 1 according to the preferred fourth embodiment of the present invention, a groove 23 for providing a foam staying space 37 therein is formed at the inner side surface of the core layer 2 which is correspond to the joint part between the core layer 2 and the skin layer 3. At this time, the skin layer 3 is formed along the core layer 2 so that it is tightly contacted with the inner surface of the core layer 2 having the groove 23.

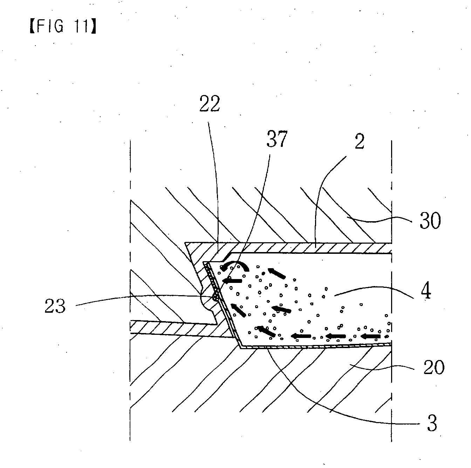

Referring to FIG. 11, in the joint structure of the partial foaming part 1 according to the preferred fourth embodiment of the present invention, a flow control wall 22 protrudes from the inner upper surface of the core layer 2 above the joint part between the core layer 2 and the skin layer 3. This flow control wall 22 changes a flowing direction of the polyurethane foam flowing over the end of the skin layer 3 due to the foaming pressure and thereby it can reduce the foaming pressure of the polyurethane foam applied to the end of the skin layer 3. Further, it minimizes the leakage of the polyurethane foam through the joint part between the core layer 2 and the skin layer 3. The flow control wall 22 as shown in FIG. 11 may be replaced with the flow control wall 21' as shown in FIG. 5B.

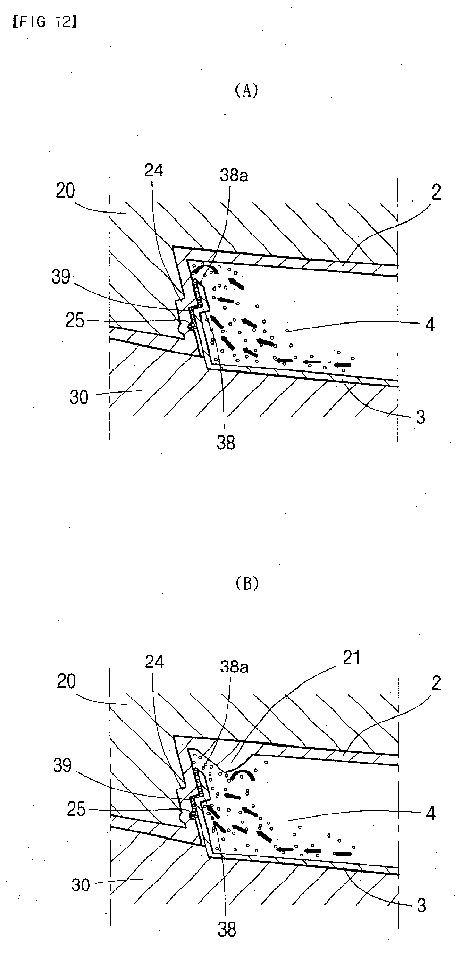

As shown in FIGS. 12A to 13B, in the joint structure of the partial foaming part 1 according to the preferred fifth and sixth embodiments of the present invention, a partial end portion 38 is formed at a front portion of the skin layer 3, which is correspond to the joint part of between the core layer 2 and the skin layer 3, and it is slanted at about 90 degrees towards an interior of the polyurethane foam layer 4. A slanted portion 38a is formed at an end of the skin layer 3 parallel to a front portion of the core layer 2. The slanted portion 38a is downwardly slanted toward the interior of the polyurethane foam layer 4.

Meanwhile, a foam leakage-preventing protrusion 24 is outwardly rounded at the front portion of the core layer 2 and it has a predetermined shape that is correspond to the shape of the partial end portion 38 of the skin layer 3. In the preferred fifth embodiment of the present invention, a groove 25 for providing a foam staying space therein is formed at the inner side surface of the core layer 2 below the foam leakage-preventing protrusion 24. Accordingly, a foam staying space 39 is provided among the partial end portion 38 of the skin layer 3, the foam leakage-preventing protrusion 24 of the core layer 2 and the groove 25. Alternatively, in the preferred sixth embodiment of the present invention, the foam leakage-preventing protrusion 24 of the core layer 2 faces to the partial end portion 38 of the skin layer 3 and also it is spaced there from at a predetermined distance. Accordingly, a foam staying space 40 for introducing the polyurethane foam therein is provided between the foam leakage-preventing protrusion 24 of the core layer 2 and the partial end portion 38 of the skin layer 3.

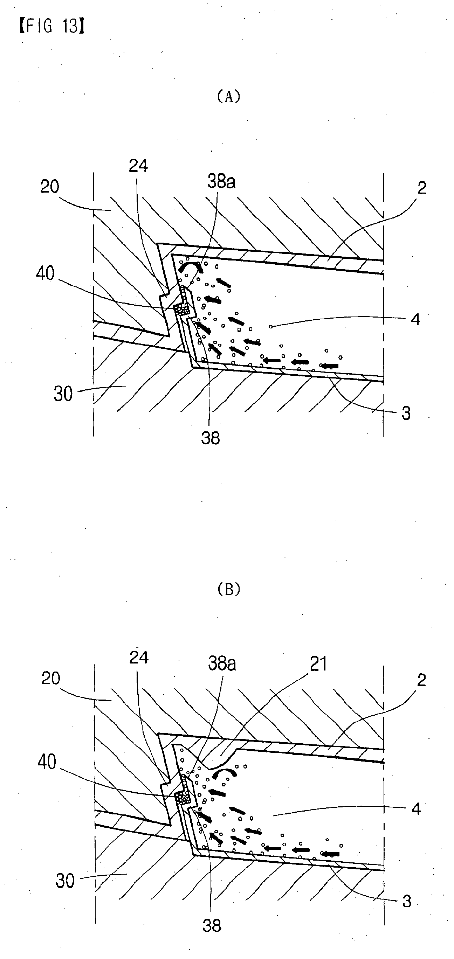

Furthermore, in the joint structure of the partial foaming part 1 according to the preferred fifth and sixth embodiments of the present invention, a flow control wall 21 protrudes from the inner upper surface of the core layer 2 above the joint part between the core layer 2 and the skin layer 3. This flow control wall 21 changes a flowing direction of the polyurethane foam flowing over the end of the skin layer 3 due to the foaming pressure and thereby it can reduce the foaming pressure of the polyurethane foam applied to the end of the skin layer 3. The flow control walls 21 as shown in FIGS. 12B and 13B may be replaced with other protrusions as described above.

Herein below, a foaming process of the partial foaming part 1 having the joint structure according to the preferred embodiments of the present invention will be explained with reference drawings FIGS. 4A to 13B.

Prior to explaining the foaming process according to the present invention, an open pour process and a closed pour process for manufacturing the instrument panel 10 having the partial foaming part 1 will be explained.

According to the open pour process, the skin layer 3 having a predetermined shape given by a predetermined foaming mold and the core layer 2 having a predetermined shape that is correspond to the total shape of the instrument panel 10 are formed, respectively.

Then, the core layer 2 and the skin layer 3 are mounted in an upper mould 20 and a lower mould 30 of the predetermined foaming mold, respectively. At this time, an inner surface of the skin layer 3 faces to upwards and an inner surface of the core layer 2 faces to downwards. Prior to closing the upper mould 20 and the lower mould 30 in which the core layer 2 and the skin layer 3 are mounted therein, polyurethane foam is poured onto an upper surface of the skin layer 3. Thereafter, the polyurethane is foamed and is cured by making the upper mould 20 to be contacted with the lower mould 30. Finally, a desired product is obtained by releasing it from the upper mould 20 and the lower mould 30.

Alternatively, according to the closed pour process, the upper mould 20 and the lower mould 30 are closed in a state that the core layer 2 and the skin layer 3 are mounted therein, respectively. Then, polyurethane foam is poured onto the upper surface of the skin layer 3 through the upper mould 20 and the core layer 2. Thereafter, the polyurethane is foamed and then is cured. Continuously, a desired product is obtained by separating the upper mould 20 from the lower mould 30. At the time that the upper mould 20 and the lower mould 30 of the predetermined foaming mold are closed during performing the partial forming process, a protrusion for securely supporting the lower end of the skin layer 3 is formed at the lower mould 30 in order to maintain a uniform slanting angle at the joint structure between the soft skin layer 3 and the core layer 2 so that it is possible.

Herein below, the process for manufacturing the partial foaming part 1 by adapting the foaming processes as described above to the joint structure according to the preferred first embodiment of the present invention will be explained.

As shown in FIGS. 4A to 4C, the polyurethane foam poured onto the upper surface of the skin layer 3 according to the open pour process or the closed pour process is spread along the surface of the skin layer 3 and upwardly protrudes during foaming process. As best seen in FIG. 4B, the polyurethane foam upwardly pushes the partial end portion 31 of the skin layer 3 and thereby the skin layer 3 is tightly contacted with the core layer 2 with centering about the partial end portion 31. As a result, the joint part between the core layer 2 and the skin layer 3 is closed. At this time, a small quantity of polyurethane foam is flowing over an end of the skin layer 3 due to the foaming pressure and thereafter it is collected in the foam staying space 33. The polyurethane foam is forcibly maintained the foam staying space 33 so that it cannot be leaked through the joint part between the core layer 2 and the skin layer 3 during foaming of the polyurethane.

Referring to FIG. 4C, the polyurethane foam flowing into the foam staying space 33 cannot be leaked through the joint part between the core layer 2 and the skin layer 3 during foaming of the polyurethane. Because the skin end portion 32 of the skin layer 3 is tightly contacted with the front portion of the core layer 2 due to foaming pressure of the polyurethane. That is, the core layer 2 and the skin layer 3 are strongly combined with each other during the foaming process of the polyurethane foam layer 4 and thereby it is possible to prevent the polyurethane foam from being leaking through the joint part of the core layer 2 and the skin layer 3.

A general type of core layer may be used as the core layer 2. By forming the skin end portion 32, which is spaced apart from the core layer 2, at the front end of the skin layer 3, it is possible to manufacture the partial foaming part 1 having an excellent combining force and to prevent a polyurethane foam from being leaking during manufacturing the partial foaming part 1. Accordingly, it is possible to reduce the cost for forming the core layer 2 and the skin layer 3 and to simplify the process for performing a partial foaming.

More particularly, as shown in FIGS. 5A and 5B, since the flow control walls 21, 21' is foamed from the inner upper surface of the core layer 2 above the joint part between the core layer 2 and the skin layer 3, the flow of the polyurethane foam flowing over the end of the skin layer 3 due to the foaming pressure is interfered with the flow of another polyurethane foam that is induced by means of the flow control walls 21,21'. As a result, the pressure of the polyurethane foam applying onto the end of the skin layer 3 may be reduced. Due to this, it is possible to further reduce the quantity of the polyurethane foam flowing over the end of the skin layer 3. Consequently, it is possible to effectively prevent the polyurethane foam from being leaking through the joint part between the core layer and the skin layer 3 during manufacturing the partial foaming part 1.

Herein below, the process for manufacturing the partial foaming part 1 by adapting the foaming processes as described above to the joint structure according to the preferred second embodiment of the present invention will be explained.

As shown in FIGS. 6A and 6B, the polyurethane foam poured onto the upper surface of the skin layer 3 is spread along the surface of the skin layer 3 and upwardly protrudes during foaming process. As best seen in FIG. 6A, the polyurethane foam upwardly pushes the partial end portion 31 of the skin layer 3 and thereby the partial end portion 34 of the skin layer 3 is tightly contacted with the foam leakage-preventing protrusion 22 of the core layer 2. As a result, the joint part between the core layer 2 and the skin layer 3 is closed. At this time, a small quantity of polyurethane foam is flowing over an end of the skin layer 3 due to the foaming pressure and thereafter it is collected in the foam staying space 36 after flowing along the skin end portion 35. The polyurethane foam is forcibly maintained in the foam staying space 36 so that it cannot be leaked through the joint part between the core layer 2 and the skin layer 3 during foaming of the polyurethane.

Referring to FIG. 6B, the polyurethane foam flowing into the foam staying space 36 cannot be leaked through the joint part between the core layer 2 and the skin layer 3 during foaming of the polyurethane. Because the skin end portion 35 of the skin layer 3 is tightly contacted with the front portion of the core layer 2 due to foaming pressure of the polyurethane. That is, the core layer 2 and the skin layer 3 are strongly combined with each other during the foaming process of the polyurethane foam layer 4 and thereby it is possible to effectively prevent the polyurethane foam from being leaking through the joint part of the core layer 2 and the skin layer 3. As shown in FIG.7, since the flow control wall 21 protrudes from the inner upper surface of the core layer 2 above the joint part between the core layer 2 and the skin layer 3, it is possible to effectively prevent the polyurethane foam from being leaking through the joint part between the core layer and the skin layer 3 during manufacturing the partial foaming part 1.

Herein below, the process for manufacturing the partial foaming part 1 by adapting the foaming processes as described above to the joint structure according to the preferred third embodiment of the present invention will be explained.

As shown in FIGS. 8A, 8B and 9, the polyurethane foam poured onto the upper surface of the skin layer 3 is spread along the surface of the skin layer 3 and upwardly protrudes during foaming process. As best seen in FIG. 8A, the polyurethane foam upwardly pushes the partial end portion 31 of the skin layer 3 and thereby the partial end portion 34 of the skin layer 3 is tightly contacted with two foam leakage-preventing protrusions 22 of the core layer 2. As a result, the joint part between the core layer 2 and the skin layer 3 is closed. At this time, a small quantity of polyurethane foam is flowing over an end of the skin layer 3 due to the foaming pressure and thereafter it is collected in the foam staying space 36 after flowing along the skin end portion 35. The polyurethane foam is forcibly maintained in the foam staying space 36 so that it cannot be leaked through the joint part between the core layer 2 and the skin layer 3 during foaming of the polyurethane.

Referring to FIG. 6B, the polyurethane foam flowing into the foam staying space 36 cannot be leaked through the joint part between the core layer 2 and the skin layer 3 during foaming of the polyurethane. Because, the skin end portion 35 of the skin layer 3 is tightly contacted with the front portion of the core layer 2 due to foaming pressure of the polyurethane. That is, the core layer 2 and the skin layer 3 are strongly combined with each other during the foaming process of the polyurethane foam layer 4 and thereby it is possible to prevent the polyurethane foam from being leaking through the joint part of the core layer 2 and the skin layer 3.

As described above, in the joint structure according to the preferred second and the third embodiments of the present invention, the skin end portion 35 is spaced from the inner upper surface of the core layer 2 at a predetermined distance. Furthermore, at least one foam leakage-preventing protrusion 22 to be inserted into the skin end portion 35 is provided at the inner side surface of the core layer 2. Accordingly, it is possible to manufacture the partial foaming part 1 having a simple structure and an excellent combining force and to effectively prevent the polyurethane foam from being leaking during formation of the partial foaming part 1. Accordingly, it is possible to reduce the cost for forming the core layer 2 and the skin layer 3 and to simplify the process for performing a partial foaming.

Herein below, the process for manufacturing the partial foaming part 1 by adapting the foaming processes as described above to the joint structure according to the preferred fourth embodiment of the present invention will be explained.

As shown in FIG. 10, the polyurethane foam poured onto the upper surface of the skin layer 3 is spread along the surface of the skin layer 3 and upwardly protrudes during foaming process. At this time, the polyurethane foam upwardly pushes the skin layer 3 toward the core layer 2 and thereby the skin layer 3 is tightly contacted with the core layer 2.

At this initial foaming step, the pressure for pushing the skin layer 3 toward the core layer 2 is smaller than the pressure of the polyurethane foam to be overflowed directly between the core layer 2 and the skin layer 3. Accordingly, a small quantity of polyurethane foam flowing over an end of the skin layer 3 due to the foaming pressure is flowing through between the core layer 2 and the skin layer 3. This polyurethane foam is forcibly maintained at the groove 23 formed in the inner side surface of the core layer 2. Under this state, since the skin layer 3 is tightly pressed toward the core layer 2 due to increasing foaming pressure of the polyurethane, the skin layer 3 is forcibly combined with the core layer 2 during foaming of the polyurethane. Consequently, it is possible to prevent the polyurethane foam from being leaking through the joint part between the core layer 2 and the skin layer 3 during foaming of the polyurethane.

As shown in FIG. 11, since the flow control wall 22 protrudes from the inner upper surface of the core layer 2 above the joint part between the core layer 2 and the skin layer 3, the flow of the polyurethane foam flowing over the end of the skin layer 3 due to the foaming pressure is interfered with another flow of the polyurethane foam that is induced by means of the flow control wall 21. As a result, the pressure of the polyurethane foam applying onto the end of the skin layer 3 may be reduced. Due to this, it is possible to further reduce the quantity of the polyurethane foam flowing over the end of the skin layer 3. Consequently, it is possible to effectively prevent the polyurethane foam from being leaking through the joint part between the core layer and the skin layer 3 during manufacturing the partial foaming part 1.

In the fourth embodiment of the present invention, there are no the skin end portions 32, 35 at the front end of the skin layer 3, which are pressed toward the core layer 2 due to the foaming pressure of the polyurethane. Accordingly, the total joint structure between the core layer 2 and the skin layer 3 is very simple in comparison with the other embodiments. Furthermore, it is possible to effectively prevent the polyurethane foam from being leaking through the joint part between the core layer and the skin layer 3 by using initial contacting force between the core layer and the skin layer 3 due to the foaming pressure and by using the groove 23 formed at the core layer 2. In addition, the combining force between the core layer 2 and the skin layer 3 is not inferior to those of other embodiments.

Herein below, the process for manufacturing the partial foaming part 1 by adapting the foaming processes as described above to the joint structure according to the preferred the fifth and the sixth embodiments of the present invention will be explained.

As shown in FIGS. 12A to 13B, the polyurethane foam poured onto the upper surface of the skin layer 3 is spread along the surface of the skin layer 3 and upwardly protrudes during foaming process. At this time, the polyurethane foam upwardly pushes the skin layer 3 toward the core layer 2 and thereby the skin layer 3 is tightly contacted with the core layer 2.

At this initial foaming step, the pressure for pushing the skin layer 3 toward the core layer 2 is smaller than the pressure of the polyurethane foam to be overflowed directly between the core layer 2 and the skin layer 3. Accordingly, a small quantity of polyurethane foam flowing over an end of the skin layer 3 due to the foaming pressure is flowing through between the core layer 2 and the skin layer 3. In the fifth embodiment according to the present invention, the polyurethane foam is primarily forcibly maintained at the foam staying space 39 that is defined by the foam leakage-preventing protrusion 24 of the core layer 2 and the partial end portion 38 of the skin layer 3. Then, it is secondarily forcibly maintained at the groove 25 formed in the inner side surface of the core layer 2. Consequently, a small quantity of the polyurethane foam overflowed directly between the core layer 2 and the skin layer 3 is forcibly maintained at the foam staying space 39 and the groove 25.

Alternatively, in the sixth embodiment according to the present invention, the pressure of the polyurethane foam highly decreases while a small quantity of the polyurethane foam is overflowed directly into the foam staying space 40 defined by the foam leakage-preventing protrusion 24 of the core layer 2 and the partial end portion 38 of the skin layer 3. As a result, a small quantity of the polyurethane foam is forcibly maintained at the foam staying space 40.

Under the state that a small quantity of the polyurethane foam overflowed directly between the core layer 2 and the skin layer 3 is forcibly maintained, the skin layer 3 is tightly pressed toward the core layer 2 due to the increasing foaming pressure of the polyurethane. Accordingly, the skin layer 3 is tightly contacted with the core layer 2 due to the foaming pressure of the polyurethane foam layer 4 during foaming of the polyurethane. Consequently, it is possible to prevent the polyurethane foam from being leaking through the joint part between the core layer 2 and the skin layer 3 during foaming of the polyurethane. Likewise other embodiments, in the fifth and the sixth embodiments according to the present invention, it is possible to prevent the polyurethane foam from being leaking through the joint part between the core layer 2 and the skin layer 3 during foaming of the polyurethane by using the flow control wall 21 as describe above.

Without forming the skin end portions 32,35 at the front end of the skin layer 3 in the fifth and the sixth embodiments, which are tightly contacted with the core layer 2 due to the foaming pressure of the polyurethane, it is possible to increase a resistance against the leakage of the polyurethane foam by using the joint structure of the core layer and the skin layer 3. In addition, by forming the foam staying space 40 in which leaked polyurethane foam is forcibly maintained, between the core layer 2 and the skin layer 3, it is possible to completely prevent the polyurethane foam from being leaking through the joint part of the core layer 2 and the skin layer 3. The combining force between the core layer 2 and the skin layer 3 is not inferior to those of other embodiments.

As described above, in the joint structure of the instrument panel according to the present invention, the polyurethane foam is not leaking through the joint part between the core layer and the skin layer during foaming of the polyurethane. Furthermore, a small quantity of polyurethane foam being forcibly pushed by the foaming pressure is forcibly stayed at the foam staying space between the core layer and the skin layer. Accordingly, it is possible to prevent the polyurethane foam from being leaking through the joint part of the core layer 2 and the skin layer 3. In addition, it is possible to prevent some materials from being unnecessarily wasted due to unnecessary use of the skin layer. Since the number of processes for performing the partial foaming is reduced, the total manufacturing process of the instrument panel becomes simple and thereby the manufacturing cost of the instrument panel is highly reduced.

In addition, it is possible to minimize the quantity of polyurethane foam overflowing along the skin layer by means of the flow control wall and to combine the core layer with the skin layer by foaming pressure of the polyurethane foam. By using the joint structure between the core layer and the skin layer, it is possible to increase the resistance against the leakage of the polyurethane foam. In addition, it is possible to prevent the polyurethane foam from being leaking by making polyurethane foam to be forcibly stayed between the core layer and the skin layer. Due to this, it is convenient to perform the partial foaming process for manufacturing the instrument panel and is possible to manufacture the partial foaming part having an excellent combining force.

While the present invention has been particularly shown and described with reference to particular embodiments thereof, it will be understood by those skilled in the art that various changes in form and details may be effected therein without departing from the spirit and scope of the invention as defined by the appended claims.

## Claims

1. In a joint structure between a core layer 2 and a skin layer 3 for manufacturing a partial foaming part 1 of which a polyurethane foam layer 4 is formed between the core layer 2 and the skin layer 3, **characterized by** comprising:
a partial end portion 31 being curved inwards within the polyurethane foam layer 4 at a front end of the skin layer 3 that is correspond to a joint part between the core layer 2 and the skin layer 3; and
a skin end portion 32 upwardly extending from an end of the partial end portion 31 and being pressed against the core layer 2 due to foaming pressure of the polyurethane foam layer 4,
wherein a foam staying space 33 is provided between an inner side surface of the core layer 2 and the skin end portion 32 of the skin layer 3.

2. The joint structure according to claim 1, **characterized by** the fact of flow control walls 21, 21', for preventing a polyurethan foam from being overflowed directly between the inner side surface of the core layer 2 and an end of the skin layer 3, downwardly protruding from an inner upper surface of the core layer 2 above the joint part of the core layer 2 and the skin layer 3.

3. In a joint structure between a core layer 2 and a skin layer 3 for manufacturing a partial foaming part 1 of which a polyurethane foam layer 4 is formed between the core layer 2 and the skin layer 3, **characterized by** comprising:
a partial end portion 34 being curved inwards from an inner side surface of the core layer 2 within the polyurethane foam layer 4 at a front end of the skin layer 3 that is correspond to a joint part between the core layer 2 and the skin layer 3;
a skin end portion 35 upwardly extending from an end of the partial end portion 34 and being pressed against the core layer 2 due to foaming pressure of the polyurethane foam layer 4; and
a foam leakage-preventing protrusion 22, for preventing a polyurethane foam from being leaking, protruding from the inner side surface of the core layer 2 which is correspond to the joint part between the core layer 2 and the skin layer 3, the foam leakage-preventing protrusion 22 being contacted with the partial end portion 34 of the skin layer 3;
wherein a foam staying space 36 is provided between the foam leakage-preventing protrusion 22 and the skin end portion 35.

4. The joint structure according to claim 3, **characterized by** the fact of a pair of foam leakage-preventing protrusions 22 protruding from the inner side surface of the core layer 2 which is correspond to the joint part of the core layer 2 and the skin layer 3, in which a foam staying space 36 is provided between the foam leakage-preventing protrusions 22 and the skin layer 3.

5. The joint structure according to claims 3 or 4, **characterized by** the fact of flow control walls 21, 21', for preventing a polyurethan foam from being overflowed directly between the inner side surface of the core layer 2 and an end of the skin layer 3, downwardly protruding from an inner upper surface of the core layer 2 above the joint part of the core layer 2 and the skin layer 3.

6. In a joint structure between a core layer 2 and a skin layer 3 for manufacturing a partial foaming part 1 of which a polyurethane foam layer 4 is formed between the core layer 2 and the skin layer 3, **characterized by** comprising:
a groove 23 for providing a foam staying space 37 therein being formed at an inner side surface of the core layer 2 which is correspond to a joint part of the core layer 2 and the skin layer 3,
a front portion of the skin layer 3 longitudinally extending along the front surface of the core layer 2 so that it may be tightly contacted with the inner side surface of the core layer 2 in which the groove 23 is formed.

7. The joint structure according to claim 6, **characterized by** the fact of flow control walls 21, 21', for preventing a polyurethan foam from being overflowed directly between the inner side surface of the core layer 2 and an end of the skin layer 3, downwardly protruding from an inner upper surface of the core layer 2 above the joint part of the core layer 2 and the skin layer 3.

8. In a joint structure between a core layer 2 and a skin layer 3 for manufacturing a partial foaming part 1 of which a polyurethane foam layer 4 is formed between the core layer 2 and the skin layer 3, **characterized by** comprising:
a partial end portion 38 being curved inwards from an inner side surface of the core layer 2 within the polyurethane foam layer 4 at a front end of the skin layer 3 that is correspond to a joint part between the core layer 2 and the skin layer 3;
a foam leakage-preventing protrusion 24, for preventing a polyurethane foam from being leaking, protruding from the inner side surface of the core layer 2 which is correspond to the joint part between the core layer 2 and the skin layer 3, the foam leakage-preventing protrusion 24 being curved with corresponding to the shape of the partial end portion 34 of the skin layer 3; and
a groove 25 for providing a foam staying space therein being formed at the inner side surface of the core layer 2 below the foam leakage-preventing protrusion 24.

9. The joint structure according to claim 8, **characterized by** the fact of flow control walls 21, 21', for preventing a polyurethan foam from being overflowed directly between the inner side surface of the core layer 2 and an end of the skin layer 3, downwardly protruding from an inner upper surface of the core layer 2 above the joint part of the core layer 2 and the skin layer 3.

10. In a joint structure between a core layer 2 and a skin layer 3 for manufacturing a partial foaming part 1 of which a polyurethane foam layer 4 is formed between the core layer 2 and the skin layer 3, **characterized by** comprising:
a partial end portion 38 being curved inwards from a front portion of the skin layer 3 at a front end of the skin layer 3 that is correspond to a joint part between the core layer 2 and the skin layer 3; and
a foam leakage-preventing protrusion 24, for preventing a polyurethane foam from being leaking, protruding from an inner side surface of the core layer 2 which is correspond to the joint part between the core layer 2 and the skin layer 3, the foam leakage-preventing protrusion 24 being curved with corresponding to the shape of the partial end portion 38 of the skin layer 3;
wherein a foam staying space 40 for introducing the polyurethane foam therein is provided between the foam leakage-preventing protrusion 24 of the core layer 2 and the partial end portion 38 of the skin layer 3.

11. The join structure according to claim 10, **characterized by** the fact of flow control walls 21, 21', for preventing a polyurethan foam from being overflowed directly between the inner side surface of the core layer 2 and an end of the skin layer 3, downwardly protruding from an inner upper surface of the core layer 2 above the joint part of the core layer 2 and the skin layer 3.
